# FASCICULE DE BREVET EUROPEEN

(11) **EP 2 906 810 B1**
(45) Date de publication et mention de la délivrance du brevet: **14.09.2016**
(21) Numéro de dépôt: 13785533.4
(22) Date de dépôt: 08.10.2013
(51) Int. Cl.: F02M 26/72, F02M 26/74, F02D 9/10

(54) **PROCÉDÉ DE MISE À LA MASSE D'UN COMPOSANT ÉLECTRIQUE**
ERDUNGSVERFAHREN FÜR EINE ELEKTRISCHE KOMPONENTE
METHOD OF GROUNDING OF AN ELECTRIC COMPONENT

(30) Priorité: 12.10.2012 FR 1259740
(43) Date de publication de la demande: 19.08.2015
(73) Titulaire: Valeo Systèmes De Contrôle Moteur, 95800 Cergy St Christophe (FR)
(72) Inventeur: COLLET, Thomas, F-95800 Cergy (FR); LE CUNFF, Didier, F-78955 Carriere Sous Poissy (FR)
(74) Mandataire: Garcia, Christine
(86) Numéro de dépôt international: PCT/FR2013/052403
(87) Numéro de publication internationale: WO 2014/057214

(56) Documents cités:
- DE-A1-102010 042 079
- FR-A1- 2 854 654
- US-A1- 2005 183 695

## Description

La présente invention concerne la mise à la masse d'un composant électrique. Le composant électrique est notamment un moteur électrique.

L'invention s'applique de préférence mais non exclusivement pour mettre à la masse un composant électrique utilisé en association avec un moteur thermique, notamment de véhicule.

Le composant électrique est par exemple un moteur électrique d'actionneur d'au moins un volet ou piston disposé dans le circuit d'air du moteur thermique.

Au sens de l'invention, on désigné par « circuit d'air de moteur thermique » le circuit entre l'entrée d'admission et la sortie d'échappement du moteur thermique. Le volet ou le piston peut être disposé dans le circuit d'admission, le circuit d'échappement, ou une boucle de recirculation par laquelle transitent les gaz d'échappement avant d'être réinjectés à l'admission (EGR en anglais). Un exemple d'un tel système est décrit dans le document DE 10 2010042079 A1.

Le volet fait par exemple partie d'une vanne.

Il est connu, pour assurer la mise à la masse d'un moteur électrique d'actionneur de vanne monté dans un corps dont le capot est en plastique et porte des pistes électriquement conductrices, d'utiliser une pièce additionnelle telle qu'un ressort qui soit en contact électrique d'une part avec le corps de la vanne et d'autre part avec les pistes du capot. La mise à la masse du composant électrique s'effectue alors par l'intermédiaire des pistes électriquement conductrices et du ressort jusqu'au corps de la vanne. Cette solution a l'inconvénient d'imposer le rajout d'une pièce, et d'imposer de dédier des zones du corps de la vanne et des pistes du capot au contact avec la pièce additionnelle. De plus, une étape de positionnement de cette pièce additionnelle dans le corps est nécessaire.

Il existe un besoin pour réaliser la mise à la masse d'un composant électrique disposé dans un corps, d'une façon relativement simple, peu encombrante et peu onéreuse.

L'invention a pour but de répondre à ce besoin et elle y parvient, selon l'un de ses aspects, à l'aide d'un procédé de mise à la masse d'un composant électrique reçu dans un corps apte à être assemblé à un capot, le capot étant en contact électrique avec le composant électrique lorsqu'il est assemblé sur le corps, procédé dans lequel :
- on positionne le capot par rapport au corps à l'aide d'une pièce de centrage disposée dans le corps et en contact électrique avec le corps, et
- on assemble le capot ainsi positionné sur le corps, de manière à ce que le capot soit d'une part en contact électrique avec la pièce de centrage et d'autre part en contact électrique avec le composant électrique.

Selon le procédé ci-dessus, la mise à la masse du composant électrique est obtenue par une continuité de contact électrique entre le corps et le composant électrique grâce à la pièce de centrage et au capot. On ajoute ainsi une fonction additionnelle à une pièce nécessaire à l'assemblage du capot sur le corps pour correctement positionner le capot sur le corps, à savoir assurer la continuité du contact électrique. On évite ainsi d'avoir recours à une pièce additionnelle pour assurer la mise à la masse du composant électrique.

Au moins une languette électriquement conductrice peut venir au contact de la pièce de centrage lorsque le capot est assemblé sur le corps. Cette languette électriquement conductrice peut permettre que le capot et la pièce de centrage soient en contact électrique à l'issue du procédé, et donc que le capot et le corps soient en contact électrique. La languette électrique est ainsi interposée entre le capot et la pièce de centrage lorsque le capot est assemblé sur le corps.

La pièce de centrage peut s'étendre en tout ou partie selon un axe longitudinal et la languette peut s'étendre en tout ou partie le long d'une portion dudit axe le long de laquelle s'étend également une partie de la pièce de centrage. Autrement dit, la pièce de centrage et la languette peuvent être en recouvrement le long dudit axe.

La languette peut être flexible, voire élastiquement déformable.

Le capot peut comprendre une paroi en plastique et au moins une piste électriquement conductrice portée par ladite paroi. Les pistes électriquement conductrices portées par le capot sont encore appelées « leadframe ».

La languette peut être en contact électrique avec la piste électriquement conductrice du capot. Ainsi, la ou les pistes électriquement conductrices du capot sont en contact électrique avec la languette, qui est en contact électrique avec la pièce de centrage, qui est elle-même en contact électrique avec le corps. On réalise ainsi la mise à la masse du composant électrique à l'issue du procédé.

La languette forme par exemple le prolongement d'une piste électriquement conductrice du capot, étant réalisée d'une seule pièce avec celle-ci. En variante, la languette et la piste sont distinctes et en contact l'une avec l'autre.

Le capot peut en outre comprendre une ou plusieurs autres pistes électriquement conductrices servant à alimenter électriquement le composant électrique.

Le composant électrique peut ne pas être directement en contact électrique avec le corps et l'invention permet d'établir indirectement un contact électrique entre le composant électrique par l'intermédiaire du capot et de la pièce de centrage.

La languette peut comprendre une portion proximale s'étendant parallèlement à la surface de la paroi du capot, une portion intermédiaire s'étendant en biais depuis la portion proximale selon une première direction, et une portion distale s'étendant en biais depuis la portion intermédiaire selon une deuxième direction sécante avec la première direction, de sorte que la languette ait une forme de S. Cette forme de la languette peut lui procurer sa flexibilité, voire son caractère élastiquement déformable. En variante, la languette est déjà réalisée dans un matériau flexible et la forme de la languette accroît encore sa flexibilité, voire son caractère élastiquement déformable.

La pièce de centrage peut être un cylindre de section transversale circulaire et plusieurs languettes peuvent être disposées sur le pourtour de ladite section du cylindre.

Le capot peut comprendre un palier configuré pour coopérer avec la pièce de centrage pour positionner le capot par rapport au corps. La languette peut alors comprendre au moins une portion qui, lorsque la pièce de centrage n'est pas reçue dans le palier, est à une distance du centre du palier inférieure au rayon de la pièce de centrage. Au repos, la languette comprend ainsi une portion disposée dans l'espace qui sera occupé par la pièce de centrage lorsque le corps et le capot seront assemblés. Lorsque la languette est élastiquement déformable, son élasticité la maintient ainsi au contact de la pièce de centrage lorsque celle-ci est dans le palier car son élasticité tend à la ramener dans sa position au repos. Un contact permanent peut ainsi être obtenu entre la languette et la pièce de centrage lorsque cette dernière est dans le palier.

Le palier peut comprendre plusieurs reliefs coopérant avec la pièce de centrage pour assurer le positionnement du capot par rapport au corps. Ces reliefs peuvent être répartis de façon discrète sur le pourtour du palier et au moins deux reliefs consécutifs du palier peuvent être séparés par une languette. Ces reliefs sont par exemple des méplats.

La pièce de centrage est par exemple en acier. La pièce de centrage peut être rapportée sur le corps, étant notamment emmanchée dans le corps.

Le composant électrique peut être un moteur électrique.

Le corps est par exemple un corps de vanne de circuit d'air d'un moteur thermique. Le moteur électrique peut alors servir à déplacer au moins un volet ou au moins une soupape de la vanne. La vanne est par exemple une vanne de recirculation des gaz (EGR en anglais), pouvant être une vanne dite « deux voies » ou une vanne dite « trois voies ».

Le moteur électrique est par exemple un moteur à courant continu ou un moteur synchrone à aimants permanents. Le moteur électrique peut présenter un couple nominal jusqu'à 200 mN.m

Le corps peut comprendre un étage de transmission disposé entre le moteur électrique et un organe à déplacer et l'étage de transmission peut comprendre au moins un arbre formant la pièce de centrage.

Dans l'application ci-dessus à une vanne, l'organe à déplacer est par exemple un volet ou une soupape de la vanne, ce dernier pouvant se déplacer en translation ou en rotation. L'étage de transmission comprend alors un arbre intermédiaire disposé entre l'arbre de sortie du moteur électrique et un arbre du volet ou de la soupape.

Le cas échéant, l'étage de transmission comprend plusieurs arbres en série entre l'arbre de sortie du moteur électrique et l'arbre du volet ou de la soupape, et l'arbre formant la pièce de centrage est l'un de ces arbres en série.

L'assemblage du capot sur le corps peut consister à solidariser le capot et le corps, par exemple par vissage, soudure, collage, encliquetage, sertissage, rivetage, ou bouterollage.

L'invention a encore pour objet, selon un autre de ses aspects, un ensemble, comprenant :
- un corps dans lequel sont disposés une pièce de centrage et un composant électrique, ledit corps étant en contact électrique avec la pièce de centrage,
- un capot configuré pour coopérer avec la pièce de centrage pour assurer un positionnement du capot par rapport au corps et pour être en contact électrique d'une part avec ladite pièce de centrage et d'autre part avec le composant électrique lorsqu'il est assemblé sur le corps.

L'ensemble peut notamment former tout ou partie d'une vanne de circuit d'air de moteur thermique.

Tout ou partie des caractéristiques mentionnées ci-dessus en rapport avec le procédé s'appliquent à l'ensemble.

Le capot peut comprendre au moins une piste électriquement conductrice en contact électrique avec le composant électrique lorsque le capot est assemblé sur le corps.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique et en élévation un ensemble selon un exemple de mise en oeuvre de l'invention, sans capot,
- la figure 2 représente en vue de dessous le capot apte à coopérer avec le corps représenté sur la figure 1, et
- la figure 3 représente en détail un exemple d'établissement d'une continuité de contact électrique entre l'arbre intermédiaire et le capot après assemblage du capot sur le corps.

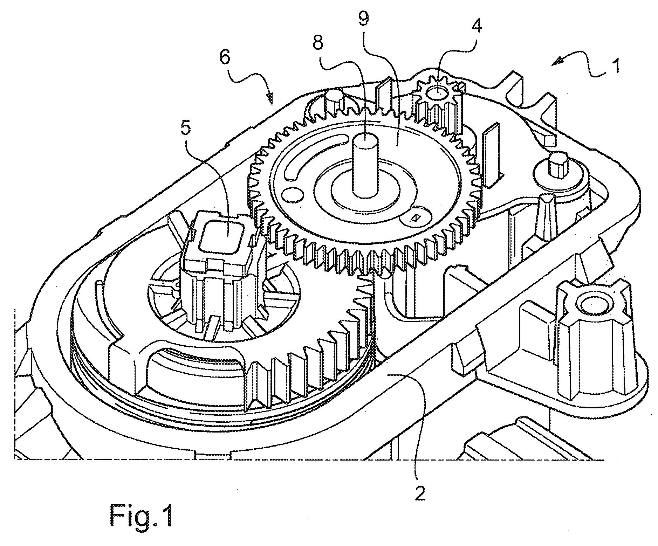

La figure 1 représente un ensemble 1 selon un exemple de mise en oeuvre de l'invention. L'ensemble 1 forme ici une vanne dont seule une partie a été représentée. Il s'agit par exemple d'une vanne dite « deux voies » ou dite « trois voies » utilisée pour contrôler le débit des gaz EGR réinjectés à l'admission d'un moteur thermique de véhicule automobile.

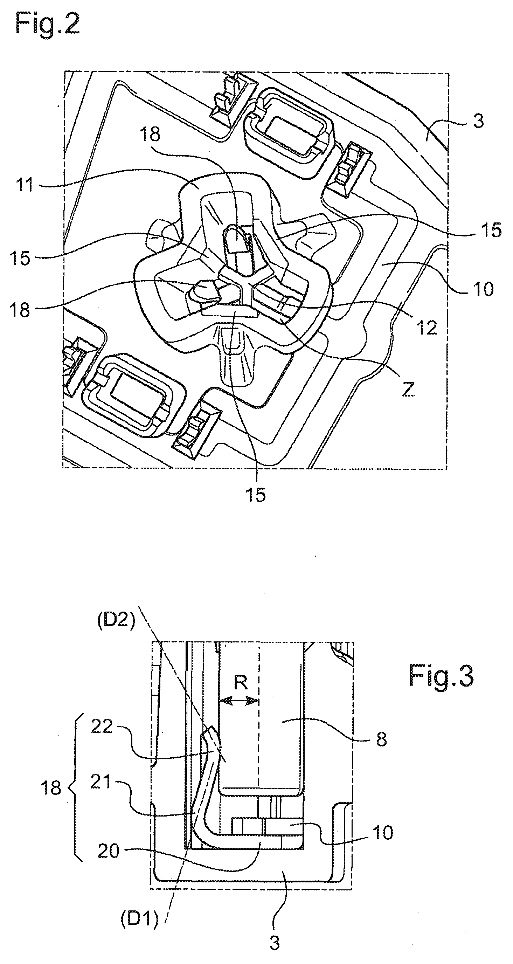

L'ensemble 1 comprend un corps 2 ainsi qu'un capot 3, non visible sur la figure 1 mais représenté sur la figure 2. Le corps 2 renferme un moteur électrique comprenant un carter métallique, par exemple en acier. Le corps 2 est par exemple réalisé en aluminium.

Le moteur électrique comprend un arbre de sortie 4 dont la position peut être contrôlée par un capteur 5. Comme représenté sur la figure 1, le corps 2 comprend un logement dans lequel est disposé un étage de transmission 6 par lequel le déplacement de l'arbre de sortie du moteur peut actionner le volet de la vanne. Cet étage de transmission 6 comprend dans l'exemple considéré un arbre intermédiaire 8 portant un pignon 9 engrenant avec un pignon solidaire de l'arbre de sortie du moteur.

L'arbre intermédiaire 8 est ici cylindrique de section transversale circulaire. Il peut dans l'exemple considéré être réalisé en acier non traité.

L'arbre intermédiaire est rapporté sur le corps2, étant notamment emmanché dans ce dernier, de sorte que l'arbre intermédiaire 8 est en contact électrique avec le corps 2 de l'ensemble 1.

Le capot 3 comprend dans l'exemple considéré une paroi en matière plastique sur laquelle est déposée une piste électriquement conductrice 10.

Le capot 3 comprend encore dans l'exemple représenté un palier 11 permettant au capot 3 d'être correctement positionné par rapport au corps 2 à l'aide de l'arbre intermédiaire 8 qui joue alors le rôle de pièce de centrage du capot 3 sur le corps 2. Le palier 11 comprend dans cet exemple une paroi entourant la zone Z destinée à recevoir l'extrémité de l'arbre intermédiaire 8 opposée à celle rapportée sur le corps. La zone Z se présente ici sous la forme d'un Y lorsqu'elle est observée de dessous, et la transition d'une branche à l'autre du Y se fait par un relief 15 coopérant avec l'arbre intermédiaire 8 pour assurer le positionnement correct du capot 3 par rapport au corps 2.

Dans l'exemple décrit, trois reliefs 15, qui sont ici des méplats, sont disposés de façon discrète sur le pourtour du palier. Deux reliefs consécutifs sont séparés l'un de l'autre par un angle de 120° mesuré depuis le centre du palier 11.

Comme on peut le voir sur la figure 2, deux languettes 18 sont prévues, les languettes 18 naissant à partir de la piste électriquement conductrice 10. Chacune de ces languettes 18 est dans l'exemple considéré disposée entre deux reliefs 15, occupant l'espace libre ménagé entre deux reliefs consécutifs 15.

On va maintenant décrire une languette 18 en référence aux figures 2 et 3.

Comme on peut le voir, chaque languette 18 peut présenter une forme de S, comprenant une portion proximale 20 s'étendant parallèlement à la paroi en plastique du capot 3, une portion intermédiaire 21 s'étendant selon une première direction en oblique D1 et une portion distale 22 s'étendant selon une deuxième direction en oblique D2, les directions D1 et D2 étant sécantes entre elles.

Comme on peut le voir sur la figure 2, lorsque l'extrémité de l'arbre intermédiaire 8 n'est pas reçue dans la zone Z du palier 11, la portion distale 22 de la languette 18 occupe à l'intérieur du palier 11 une position occupée par l'arbre 8 lorsqu'il coopère avec le palier 11. La portion distale 22 présente ainsi une position au repos dans laquelle elle est située à une distance radiale du centre 12 du palier 11 inférieure au rayon R de l'arbre intermédiaire 8.

Chaque languette 18 est ici élastiquement déformable, de sorte que l'introduction de l'arbre intermédiaire 8 dans la zone Z pour procéder au positionnement du capot 3 par rapport au corps 2 écarte la portion intermédiaire 21 et la portion distale 22 du centre 12 du palier 11. Du fait de son caractère élastiquement déformable, la languette 18 tend à revenir vers sa position au repos, de sorte que les portions intermédiaires 21 et distale 22 de la languette s'appliquent en permanence contre l'arbre intermédiaire 8 lorsque ce dernier est reçu dans le palier 11.

Une force F d'au moins 5 N peut être appliquée par chaque languette 18 sur l'arbre intermédiaire 8.

Une continuité de contact électrique existe ainsi dans l'exemple décrit entre le boîtier 2 et le moteur électrique lorsque le capot 3 est assemblé sur le corps 2, par exemple par vissage, collage, soudure, encliquetage, sertissage, rivetage, bouterollage ou autre.

En effet, la piste 10 du capot 3 est reliée au moteur électrique et elle est également en contact électrique avec les languettes 18. Les languettes 18 sont en contact électrique avec l'arbre intermédiaire 8 qui est lui-même en contact électrique avec le corps 2. On assure ainsi une mise à la masse du moteur électrique servant à actionner un ou plusieurs volets de la vanne à l'aide de l'arbre intermédiaire 8 qui est par ailleurs utilisé pour positionner correctement le capot 3 par rapport au corps 2, avant de procéder à la solidarisation du capot 3 et du corps 2.

Dans l'exemple considéré, le capot 3 porte d'autres pistes électriquement conductrices pour alimenter électriquement le moteur électrique. L'alimentation électrique et la mise à la masse du moteur électrique s'effectuent ainsi dans cet exemple par l'intermédiaire du capot 3.

L'invention n'est pas limitée à l'application particulière qui vient d'être décrit

L'expression « comprenant un » doit être comprise comme synonyme de l'expression « comprenant au moins un », sauf lorsque le contraire est spécifié.

## Revendications

1. Procédé de mise à la masse d'un composant électrique reçu dans un corps (2) apte à être assemblé à un capot (3), le capot (3) étant en contact électrique avec le composant électrique lorsqu'il est assemblé sur le corps, procédé dans lequel :
- on positionne le capot (3) par rapport au corps (2) à l'aide d'une pièce de centrage (8) disposée dans le corps (2) et en contact électrique avec le corps (2), et
- on assemble le capot (3) ainsi positionné sur le corps (2), de manière à ce que le capot (3) soit d'une part en contact électrique avec la pièce de centrage (8) et d'autre part en contact électrique avec le composant électrique.

2. Procédé selon la revendication 1, dans lequel au moins une languette (18) électriquement conductrice vient au contact de la pièce de centrage (8) lorsque le capot (3) est assemblé sur le corps (2).

3. Procédé selon la revendication 1 ou 2, dans lequel le capot (3) comprend une paroi en plastique et au moins une piste électriquement conductrice (10) portée par ladite paroi.

4. Procédé selon les revendications 2 et 3, dans lequel la languette (18) est en contact électrique avec la piste électriquement conductrice (10) du capot (3).

5. Procédé selon la revendication 4, dans lequel la languette (18) comprend une portion proximale (20) s'étendant parallèlement à la surface de la paroi du capot (3), une portion intermédiaire (21) s'étendant en biais depuis la portion proximale (20) selon une première direction (D1), et une portion distale (22) s'étendant en biais depuis la portion intermédiaire (21) selon une deuxième direction (D2) sécante avec la première direction (D1), de sorte que la languette ait une forme de S.

6. Procédé selon la revendication 4 ou 5, dans lequel la pièce de centrage (8) est un cylindre de section transversale circulaire, et dans lequel plusieurs languettes (18) sont disposées sur le pourtour dudit cylindre.

7. Procédé selon la revendication 6, dans lequel le capot (3) comprend un palier (11) configuré pour coopérer avec la pièce de centrage (8) pour positionner le capot (3) par rapport au corps (2), et dans lequel la languette (18) comprend au moins une portion (22), qui lorsque la pièce de centrage (8) n'est pas reçue dans le palier (11), est à une distance du centre (12) du palier (11) inférieure au rayon (R) de la pièce de centrage (8).

8. Procédé selon l'une quelconque des revendications précédentes, dans lequel le composant électrique est un moteur électrique et dans lequel le corps (2) est un corps de vanne pour circuit d'air de moteur thermique.

9. Procédé selon la revendication précédente, dans lequel le corps (2) comprend un étage de transmission (6) du mouvement du moteur électrique à au moins un volet de la vanne, ledit étage de transmission (6) comprenant au moins un arbre formant la pièce de centrage (8).

10. Ensemble (1), comprenant :
- un corps (2) dans lequel sont disposés une pièce de centrage (8) et un composant électrique comprenant un corps, ledit boitier étant en contact électrique avec la pièce de centrage (8),
- un capot (3) configuré pour coopérer avec la pièce de centrage (8) pour assurer un positionnement du capot (3) par rapport au corps (2) et pour être en contact électrique d'une part avec ladite pièce de centrage (8) et d'autre part avec le composant électrique, lorsqu'il est assemblé sur le corps (2).

11. Ensemble selon la revendication 10, formant tout ou partie une vanne de circuit d'air de moteur thermique.

## Patentansprüche

1. Erdungsverfahren für eine elektrische Komponente, die in einem Körper (2) aufgenommen ist, der geeignet ist, an einer Motorhaube (3) montiert zu werden, wobei sich die Motorhaube (3) in elektrischem Kontakt mit der elektrischen Komponente befindet, wenn sie auf dem Körper montiert wird, wobei bei dem Verfahren Folgendes durchgeführt wird:
- Anordnen der Motorhaube (3) in Bezug auf den Körper (2) mithilfe eines Zentrierstücks (8), das in dem Körper (2) angebracht und in elektrischem Kontakt mit dem Körper (2) ist, und
- Montieren der auf diese Weise auf dem Körper (2) angeordneten Motorhaube (3) derart, dass sich die Motorhaube (3) einerseits in elektrischem Kontakt mit dem Zentrierstück (8) und andererseits in elektrischem Kontakt mit der elektrischen Komponente befindet.

2. Verfahren nach Anspruch 1, wobei mindestens eine elektrisch leitende Lasche (18) mit dem Zentrierstück (8) in Kontakt kommt, wenn die Motorhaube (3) auf dem Körper (2) montiert wird.

3. Verfahren nach Anspruch 1 oder 2, wobei die Motorhaube (3) eine Kunststoffwand und mindestens eine elektrische Leiterbahn (10) aufweist, die von der Wand getragen wird.

4. Verfahren nach den Ansprüchen 2 und 3, wobei sich die Lasche (18) in elektrischem Kontakt mit der elektrischen Leiterbahn (10) der Motorhaube (3) befindet.

5. Verfahren nach Anspruch 4, wobei die Lasche (18) einen proximalen Abschnitt (20) aufweist, der sich parallel zur Oberfläche der Wand der Motorhaube (3) erstreckt, wobei sich ein Zwischenabschnitt (21) schräg von dem proximalen Abschnitt (20) gemäß einer ersten Richtung (D1) erstreckt, und sich ein distaler Abschnitt (22) schräg von dem Zwischenabschnitt (21) gemäß einer zweiten Richtung (D2), die die erste Richtung (Dl) schneidet, derart erstreckt, dass die Lasche eine S-Form aufweist.

6. Verfahren nach Anspruch 4 oder 5, wobei es sich bei dem Zentrierstück (8) um einen Zylinder mit kreisförmigem Querschnitt handelt und wobei mehrere Laschen (18) auf dem Umfang dieses Zylinders angeordnet sind.

7. Verfahren nach Anspruch 6, wobei die Motorhaube (3) ein Lager (11) aufweist, das konfiguriert ist, um mit dem Zentrierstück (8) zusammenzuwirken, um die Motorhaube (3) in Bezug auf den Körper (2) anzuordnen, und wobei die Lasche (18) mindestens einen Abschnitt (22) aufweist, der sich, wenn das Zentrierstück (8) nicht in das Lager (11) aufgenommen ist, in einem Abstand von der Mitte (12) des Lagers (11) befindet, der kleiner ist als der Radius (R) des Zentrierstücks (8).

8. Verfahren nach einem der vorhergehenden Ansprüche, wobei die elektrische Komponente ein Elektromotor ist und wobei der Körper (2) ein Ventilkörper für ein Ansaugsystem eines Verbrennungsmotors ist.

9. Verfahren nach dem vorhergehenden Anspruch, wobei der Körper (2) eine Stufe zur Übertragung (6) der Bewegung des Elektromotors mit mindestens einer Ventilklappe aufweist, wobei die Übertragungsstufe (6) mindestens eine Welle aufweist, die das Zentrierstück (8) bildet.

10. Anordnung (1), umfassend:
- einen Körper (2), in dem ein Zentrierstück (8) und eine elektrische Komponente, die einen Körper umfasst, angebracht sind, wobei sich das Gehäuse in elektrischem Kontakt mit dem Zentrierstück (8) befindet,
- eine Motorhaube (3), die konfiguriert ist, um mit dem Zentrierstück (8) zusammenzuwirken, um eine Anordnung der Motorhaube (3) in Bezug auf den Körper (2) zu gewährleisten und um sich einerseits in elektrischem Kontakt mit dem Zentrierstück (8) und andererseits mit der elektrischen Komponente zu befinden, wenn sie auf dem Körper (2) montiert ist.

11. Anordnung nach Anspruch 10, die das gesamte oder einen Teil eines Ansaugventils eines Verbrennungsmotors bildet.

## Claims

1. Method for earthing an electrical component which is received in a body (2) which is capable of being assembled with a cover (3), the cover (3) being in electrical contact with the electrical component when it is assembled on the body, in which method:
- the cover (3) is positioned relative to the body (2) using a centering component (8) which is arranged in the body (2) and in electrical contact with the body (2), and
- the cover (3) is assembled in a state positioned in this manner on the body (2) so that the cover (3) is, on the one hand, in electrical contact with the centering component (8) and, on the other hand, in electrical contact with the electrical component.

2. Method according to Claim 1, wherein at least one electrically conductive tongue (18) moves into contact with the centering component (8) when the cover (3) is assembled on the body (2).

3. Method according to Claim 1 or Claim 2, wherein the cover (3) comprises a wall of plastics material and at least one electrically conductive track (10) which is carried by the wall.

4. Method according to Claims 2 and 3, wherein the tongue (18) is in electrical contact with the electrically conductive track (10) of the cover (3).

5. Method according to Claim 4, wherein the tongue (18) comprises a proximal portion (20) which extends parallel with the surface of the wall of the cover (3), an intermediate portion (21) which extends obliquely from the proximal portion (20) in a first direction (D1) and a distal portion (22) which extends obliquely from the intermediate portion (21) in a second direction (D2) which intersects with the first direction (D1) so that the tongue has an S-shape.

6. Method according to Claim 4 or 5, wherein the centering component (8) is a cylinder which has a circular cross-section and wherein a plurality of tongues (18) are arranged on the periphery of the cylinder.

7. Method according to Claim 6, wherein the cover (3) comprises a bearing (11) which is configured to cooperate with the centering component (8) in order to position the cover (3) relative to the body (2), and wherein the tongue (18) comprises at least one portion (22) which, when the centering component (8) is not received in the bearing (11), is at a distance from the center (12) of the bearing (11) less than the radius (R) of the centering component (8).

8. Method according to one of the preceding claims, wherein the electrical component is an electric motor and wherein the body (2) is a valve body for a heat engine air circuit.

9. Method according to the preceding claim, wherein the body (2) comprises a transmission stage (6) for the movement of the electric motor to at least one flap of the valve, the transmission stage (6) comprising at least one shaft which forms the centering component (8).

10. Assembly (1) comprising:
- a body (2) in which a centering component (8) and an electrical component comprising a body are arranged, said casing being in electrical contact with the centering component (8),
- a cover (3) which is configured to cooperate with the centering component (8) in order to ensure positioning of the cover (3) relative to the body (2) and to be in electrical contact, on the one hand, with the centering component (8) and, on the other hand, with the electrical component when it is assembled on the body (2).

11. Assembly according to Claim 10, forming all or a portion of a valve of a heat engine air circuit.
